(19) Europäisches Patentamt

European Patent Office

Office européen des brevets

(11) EP 0 793 786 B1

## (12) EUROPÄISCHE PATENTSCHRIFT

(45) Veröffentlichungstag und Bekanntmachung des Hinweises auf die Patenterteilung:
**22.03.2000 Patentblatt 2000/12**

(21) Anmeldenummer: **95941016.8**

(22) Anmeldetag: **25.11.1995**

(51) Int Cl.$^7$: **F16H 61/06**

(86) Internationale Anmeldenummer:
**PCT/EP95/04647**

(87) Internationale Veröffentlichungsnummer:
**WO 96/17189 (06.06.1996 Gazette 1996/26)**

(54) **VERFAHREN ZUR STEUERUNG EINES AUTOMATISCHEN GETRIEBES**

METHOD OF OPERATING AN AUTOMATIC GEARBOX

PROCEDE POUR CONTROLER UNE BOITE DE VITESSES AUTOMATIQUE

(84) Benannte Vertragsstaaten:
**DE FR GB IT**

(30) Priorität: **02.12.1994 DE 4442991**

(43) Veröffentlichungstag der Anmeldung:
**10.09.1997 Patentblatt 1997/37**

(73) Patentinhaber: **ZF FRIEDRICHSHAFEN Aktiengesellschaft**
**88038 Friedrichshafen (DE)**

(72) Erfinder:
• **DREIBHOLZ, Ralf**
  **D-88074 Meckenbeuren (DE)**
• **FROTSCHER, Gerd**
  **D-88048 Friedrichshafen (DE)**
• **SCHOBER, Thomas**
  **D-88048 Friedrichshafen (DE)**
• **VOHMANN, Martin**
  **D-88097 Eriskirch (DE)**

(56) Entgegenhaltungen:
**EP-A- 0 435 373        EP-A- 0 475 585**
**DE-A- 4 240 621**

EP 0 793 786 B1

**Beschreibung**

Die Erfindung betrifft ein Verfahren zur Steuerung und Regelung eines automatischen Getriebes.

Aus der EP-OS 0 435 374 ist ein Verfahren zum Steuern eines automatischen Getriebes bekannt, bei dem eine Schaltung von einem ersten in ein zweites Übersetzungsverhältnis erfolgt, indem eine erste Kupplung öffnet und eine zweite Kupplung schließt. Mit Beginn der Schaltung wird der Druck der ersten Kupplung abgesenkt, wobei die Kupplung nicht ins Rutschen gebracht wird. Der Verlauf einer Turbinendrehzahl legt den Abschaltpunkt der ersten Kupplung fest. Nach Auftreten des Abschaltpunktes wird der Kupplungsschlupf der zweiten Kupplung in Abhängigkeit einer Zeitfunktion gesteuert.

In der nicht vorveröffentlichten deutschen Patentanmeldung P 44 24 456.8 vom 12.07.94 entsprechend EP-A-770 195 ist ebenfalls ein Verfahren zur Steuerung eines automatischen Getriebes beschrieben. Das Verfahren beruht auf einer Ablaufsteuerung. Für eine Hochschaltung besteht das Verfahren aus folgenden Schritten: Schnellfüllphase, Füllausgleichsphase, Lastübernahmephase, Gradient-Einstellphase, Gleitphase, Gradient-Abbauphase und Schließphase. Bei dem beschriebenen Verfahren könnte es als nachteilig empfunden werden, daß eine Falschbefüllung der zuschaltenden Kupplung, zum Beispiel aufgrund der Temperatur, nicht berücksichtigt ist.

Aus der DE-A 42 40 621 ist ein Verfahren zur Steuerung und Regelung der Lastübernahme während einer Überschneidungsschaltung bekannt geworden, bei der die abschaltende Kupplung in Abhängigkeit der zu übernehmenden Last gesteuert bzw. geregelt wird. Dem Steuerungsverfahren wird eine Regelung überlagert, wobei der Regler einer Sollwertkennlinie für eine Drehzahldifferenz folgt und den Druck an der abzuschaltenden Kupplung senkt. Dieser Steuerungs- und/oder Regelungsvorgang beginnt in der Schnellfüll- und Füllausgleichsphase und läuft zudem in zwei Phasen ab, was den Abstimmungsaufwand entsprechend erhöht.

Der Erfindung liegt die Aufgabe zugrunde, ein fehlerhaftes Ineingrifftreten der zuschaltenden Kupplung zu erkennen und einen sicheren Schaltungsablauf zu gewährleisten.

Die Aufgabe wird erfindungsgemäß mittels eines Verfahrens zur Steuerung und Regelung eines von einer Antriebseinheit, vorzugsweise Brennkraftmaschine, angetriebenen automatischen Getriebes gelöst. Hierbei steuert ein elektronisches Steuergerät aufgrund von Eingangsgrößen über elektromagnetische Stellglieder Kupplungen und Bremsen des automatischen Getriebes. Eine Schaltung des automatischen Getriebes von einem ersten in ein zweites Übersetzungsverhältnis wird ausgeführt, indem eine Ablaufsteuerung eine erste Kupplung öffnet und eine zweite Kupplung schließt, hierbei während der Schaltung keine Drehzahlüberhöhung einer Getriebeeingangsdrehzahl auftritt. Ein fehlerhaftes Ineingrifftreten der zweiten Kupplung wird erkannt, wenn die Getriebeeingangsdrehzahl während einer Lastübernahmephase größer wird als das Produkt aus einer Getriebeabtriebsdrehzahl mal dem ersten Übersetzungsverhältnis. Beim Auftreten des Fehlers wird die Ablaufsteuerung abgebrochen und eine Regelphase für die abschaltende Kupplung begonnen.

Die erfindungsgemäße Lösung bietet den Vorteil, daß nur im Einzelfall ein Wechsel vom Steuerungsverfahren zum Regelverfahren für die erste Kupplung erfolgt. Gegenüber einem ausschließlichen Regelverfahren ergibt sich somit eine wesentliche Verringerung von Abstimmungsparametern. Ein weiterer Vorteil besteht darin, daß der schwer zu regelnde Übergang vom Haften ins Gleiten der ersten Kupplung entfällt.

In einer Ausgestaltung Anspruch 2 wird vorgeschlagen, daß in der Regelphase das Druckniveau der ersten Kupplung derart eingestellt wird, daß die Getriebeeingangsdrehzahl einen zweiten Grenzwert dn2 nicht übersteigt.

In einer weiteren Ausgestaltung gemäß Anspruch 4 wird vorgeschlagen, daß die Regelphase der ersten Kupplung endet, wenn die Differenz der Getriebeeingangsdrehzahl minus dem Produkt aus Getriebeabtriebsdrehzahl mal dem ersten Übersetzungsverhältnis einen dritten positiven Grenzwert dn3 unterschreitet. Danach wird von einem ersten Druckniveau zum Ende der Regelphase auf ein zweites Druckniveau rampenförmig übergegangen. Das zweite Druckniveau entspricht hierbei dem aus der Ablaufsteuerung berechneten Druckniveau.

In den Zeichnungen ist ein Ausführungsbeispiel dargestellt.
Es zeigen:

Fig. 1     ein Zustandsdiagramm und

Fig. 2     ein Zeitdiagramm einer Hochschaltung.

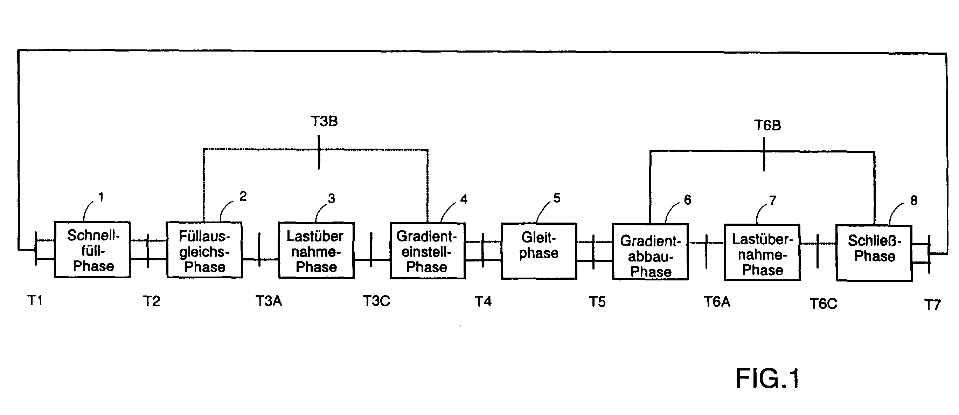

Fig. 1 zeigt ein Zustandsdiagramm für die Ablaufsteuerung, bestehend aus:
Schnellfüllphase 1, Füllausgleichsphase 2, Lastübernahmephase 3, Gradient-Einstellphase 4, Gleitphase 5, Gradient-Abbauphase 6, Lastübernahmephase 7 und Schließphase 8. Die durchgezogene Linie entspricht hierbei dem Ablauf einer Schaltung der ersten Schaltungsart. Unter einer Schaltung der ersten Schaltungsart ist eine Hochschaltung im Zug bzw. eine Rückschaltung im Schub zu verstehen. Die strichpunktierte Linie entspricht einem Ablauf für eine Schaltung der zweiten Schaltungsart. Unter zweiter Schaltungsart ist eine Rückschaltung im Zug bzw. eine Hochschaltung im Schub zu verstehen. Ein Ablauf gemäß des Zustandsdiagrammes wird für jede der beiden an der Schaltung beteiligten Kupplungen ausgeführt. Der Übergang von einer Phase in eine andere ist abhängig vom Auftreten definierter Ereignisse bzw. Bedingungen, nachfolgend Transition genannt.

Für eine Schaltung der ersten Schaltungsart ergibt sich für die zweite Kupplung folgender Ablauf: Transition T1, ein elektronisches Steuergerät, erkennt aufgrund von Eingangssignalen eine Schaltungsanforderung und gibt einen Schaltbefehl aus. Es folgt die Schnellfüllphase 1. Während der Schnellfüllphase 1 wird die zweite Kupplung mit hohem Druck, dem Schnellfülldruck, beaufschlagt. Bei Transition T2 wird geprüft, ob eine Zeitstufe, die die Dauer des Schnellfülldruckes steuert, abgelaufen ist. Danach folgt die Füllausgleichsphase 2. In der Füllausgleichsphase 2 wird die zweite Kupplung mit Druckmedium befüllt. Die zweite Kupplung überträgt noch kein Moment. Bei Transition T3A wird geprüft, ob eine Zeitstufe, die die Dauer des Füllausgleiches steuert, abgelaufen ist. Danach folgt die Lastübernahmephase 3. In der Lastübernahmephase 3 wird der Druck in der zweiten Kupplung vom Füllausgleichsniveau auf einen Endwert pEl = f (Kenngröße 1) erhöht. Die Kenngröße 1 entspricht einem statischen Moment, welches wiederum einer Funktion des aktuellen von einer Antriebseinheit, zum Beispiel Brennkraftmaschine, abgegebenen Moments mal einem Wandlungsverhältnis, entspricht. Bei Verwendung eines Automatgetriebes ohne hydrodynamischen Wandler entspricht das statische Moment dem aktuellen, von der Brennkraftmaschine abgegebenen Moment. Transition T3C ist dann erfüllt, wenn das Moment an der zweiten Kupplung dem statischen Moment entspricht. Danach folgt die Gradient-Einstellphase 4. In der Gradient-Einstellphase 4 wird der Druck der zweiten Kupplung vom Endwert pEl auf einen Endwert pE2 erhöht. Der Endwert pE2 ist eine Funktion einer Kenngröße 2. In der Kenngröße 2 ist ein dynamisches Moment enthalten. Bei Transition T4 wird geprüft, ob eine Zeitstufe abgelaufen ist. Danach folgt die Gleitphase 5. Bei Transition T5 wird geprüft, ob ein Vorsynchronpunkt erreicht ist. Der Vorsynchronpunkt wird aus einem Differenzdrehzahl-Gradient der zweiten Kupplung, dem aktuellen Differenzdrehzahlwert der zweiten Kupplung und einer Zeitstufe, bestimmt. Danach folgt die Gradient-Abbauphase 6. In der Gradient-Abbauphase wird der Druck auf einen Endwert pE3 = f (Kenngröße 3) verringert. Die Kennröße 3 ist festgelegt durch eine Zeitstufe für den Übergang vom Differenzdrehzahl-Gradient am Vorsynchronpunkt zum Differenzdrehzahl-Gradient am Synchronpunkt. Der Differenzdrehzahl-Gradient und die Differenzdrehzahl am Synchronpunkt der zweiten Kupplung sind Null. Während dieser Phase wird das zuvor aufgebaute dynamische Moment wieder abgebaut. Bei Transition T6B wird geprüft, ob der Druck aus dem dynamischen Moment abgebaut bzw. ob die Synchrondrehzahl erreicht ist. Danach folgt die Schließphase 8. Während der Schließphase 8 wird der Druck an der zweiten Kupplung rampenförmig erhöht, bis der Absolutwert der Differenzdrehzahl der zweiten Kupplung innerhalb einer dritten Zeitstufe kleiner einem Sollwert ist. Ist diese Bedingung erfüllt, so wird die zweite Kupplung mit Hauptdruck beaufschlagt. Bei Transition T7 wird geprüft, ob ein Haften der zweiten Kupplung erkannt ist. Danach beginnt das Zustandsdiagramm wieder bei T1.

Eine Schaltung der zweiten Schaltungsart besteht aus einer Schnellfüll- 1, einer Füllausgleichs- 2, einer Gradient-Einstell- 4, einer Gleit- 5, einer Gradient-Abbau- 6, einer Lastübernahme- 7 und einer Schließphase 8. Die Funktionsblöcke wurden bereits zuvor beschrieben, so daß auf eine nochmalige Beschreibung verzichtet wird. Ergänzend kommen die Transitionen T3B, T6A und T6C hinzu. Bei T3B wird für die erste Kupplung geprüft, ob eine Zeitstufe für den Füllausgleich abgelaufen ist. Bei Transition T6A wird für die erste Kupplung geprüft, ob der Druck aus dem dynamischen Moment abgebaut ist und bei Transition T6C, ob eine Zeitstufe abgelaufen ist.

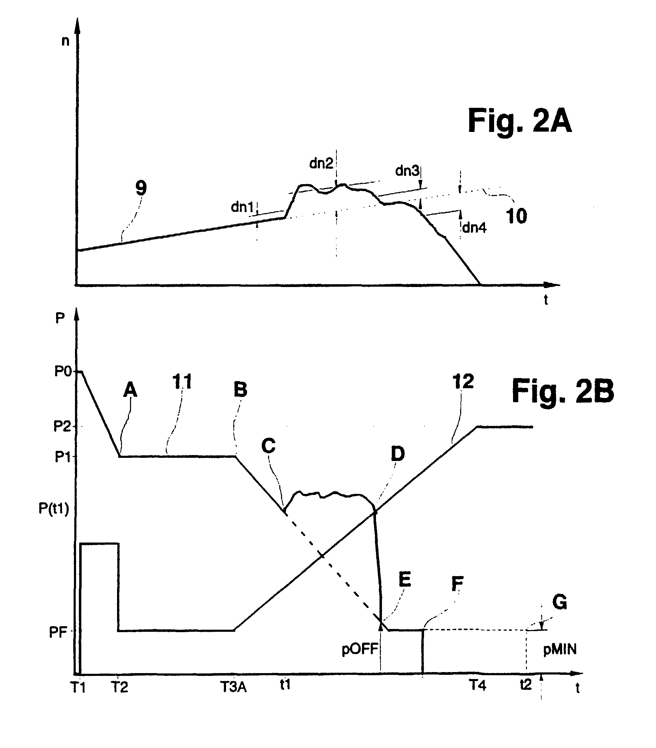

Fig. 2A und 2B zeigen für eine Schaltung der ersten Schaltungsart, zum Beispiel Hochschaltung, den Drehzahlverlauf einer Getriebeeingangsdrehzahl 9 und den Druckverlauf über der Zeit für die erste Kupplung 11 und die zweite Kupplung 12. Die auf der Abszisse dargestellten Werte von T entsprechen den Transitionen aus Fig. 1. Bei T1 gibt ein elektronisches Steuergerät den Schaltbefehl aus. Gleichzeitig wird der Druck der ersten Kupplung 11 von einem Anfangswert p0 auf einen Druckwert des Punktes A reduziert. Das Druckniveau des Punktes A liegt oberhalb der Rutschgrenze der ersten Kupplung 11. Ebenfalls bei Transition T1 wird die zweite Kupplung 12 mit hohem Druck, dem Schnellfülldruck, beaufschlagt. Dies entspricht der Schnellfüllphase aus Fig. 1. Transition T2, die Zeitstufe für die Schnellfüllphase, ist abgelaufen. Es beginnt für die zweite Kupplung 12 die Füllausgleichsphase bis zur Transition T3A. Während der Füllausgleichsphase, Druckniveau pF, wird die zweite Kupplung 12 mit Druckmedium befüllt, sie überträgt noch kein Moment. Das Druckniveau der ersten Kupplung 11 bleibt während der Füllausgleichsphase der zweiten Kupplung 12 konstant, Druckniveau pl. Bei Transition T3A wird geprüft, ob eine Zeitstufe für den Füllausgleich abgelaufen ist. Ist die Bedingung erfüllt, so beginnt für die zweite Kupplung 12 die Lastübernahmephase. Während der Lastübernahmephase wird der Druck der ersten Kupplung 11 vom Druckniveau p1, Punkt B, über eine negative Druckrampe auf den Druckendwert, Punkt E, reduziert. Entspricht nun der tatsächliche Druckverlauf der zweiten Kupplung 12 nicht dem gesteuerten Druck, zum Beispiel aufgrund der Temperatur des Druckmediums, so tritt ein Fehler auf. Der Fehler bewirkt, daß die Getriebeeingangsdrehzahl 9 größer wird als das Produkt aus Getriebeabtriebsdrehzahl mal erstem Übersetzungsverhältnis bzw. größer wird als ein erster Grenzwert dn1. In Fig. 2A ist dieses Produkt als strichpunktierte Linie 10 dargestellt. Zum Zeitpunkt t1 überschreitet die Getriebeeingangsdrehzahl den ersten Grenzwert dn1. Zum Zeitpunkt t1 hat das Druckniveau der ersten Kupplung 11 den Druckwert p (t1) im Punkt C erreicht. Mit Auftreten des Fehlers wird die Ablaufsteuerung abgebrochen und eine Regelphase für die erste Kupplung 11 beginnt. Der Druckverlauf während der Regelphase wird derart eingestellt, daß die Getriebeeingangsdrehzahl 9 einen zweiten Grenzwert dn2 nicht übersteigt. In Fig. 2 entspricht dies dem Kurvenzug zwischen den Punkten C und D. In der Regelphase wird das Druckniveau der ersten Kupplung 11 nach folgender Formel berechnet:

$$pK = (p(t1) - pOFF) (M\_MOT/M\_MOT (t1)) + pRegel + pOFF$$

$$pRegel = f(dn\_T(Soll), dn\_T(Ist))$$

Hierin bedeuten die Indizes t1 denjenigen Zeitpunkt, in dem eine Überhöhung der Getriebeeingangsdrehzahl auftritt, p(t1) das Druckniveau der Kupplung 11 zu diesem Zeitpunkt, M_Mot das aktuelle, von der Antriebseinheit abgegebene Moment, M_MOT(t1) das von der Antriebseinheit abgegebene Moment zum Zeitpunkt t1 und dn_T die Differenz der Getriebeingangsdrehzahl minus dem Produkt aus Getriebeabtriebsdrehzahl mal dem ersten Übersetzungsverhältnis. Der Druckanteil pOFF berücksichtigt die Kolbenrückstellkraft.

Wenn sich in der zweiten Kupplung 12 ein entsprechend hohes Druckniveau aufgebaut hat, übernimmt diese die Last von der ersten Kupplung 11. Dies zeigt sich darin, daß die Getriebeeingangsdrehzahl 9 einen dritten positiven Grenzwert dn3 unterschreitet. Mit Unterschreiten dieses Grenzwertes wird das Druckniveau der ersten Kupplung 11 vom Druckwert des Punktes D auf den Druckwert des Punktes E in Form einer Rampe verringert. Durch die Rampe wird vermieden, daß die erste Kupplung 11 erneut öffnet. Das Druckniveau des Punktes E entspricht hierbei dem aus der Ablaufsteuerung berechneten Druckniveau zu diesem Zeitpunkt. Unterschreitet die erste Kupplung 11 einen vierten negativen Grenzwert dn4, so wird die erste Kupplung 11 vollständig geöffnet, Punkt F. Das Druckniveau des Punktes F, pMIN, entspricht einem minimalen Kupplungsdruck.

Mit Ende der Gradient-Einstellphase der zweiten Kupplung 12, Druckniveau p2, beginnt eine Zeitstufe. Ist die Zeitstufe abgelaufen, so wird die erste Kupplung 11 zwangsweise geöffnet. Dieser Fall ist in Fig. 2B durch den gestrichelten Druckverlauf zwischen den Punkten F und G dargestellt.

Da der weitere Schaltungsablauf für das Verständnis der Erfindung nicht relevant ist, wurde dieser nicht weiter dargestellt. Soweit es um andere Schaltungsarten geht, ausgenommen die hier beschriebene Hochschaltung, wird ausdrücklich auf die Figurenbeschreibung der deutschen Patentanmeldung P 44 24 456.8 vom 12.07.94 verwiesen. Die dort im Zusammenhang mit anderen Schaltungen gemachten Ausführungen sind somit ergänzender Bestandteil der hier gemachten Erläuterungen.

**Patentansprüche**

1.  Verfahren zur Steuerung und Regelung eines von einer Antriebseinheit, vorzugsweise Brennkraftmaschine, angetriebenen automatischen Getriebes mit einem elektronischen Steuergerät, das aufgrund von Eingangsgrößen über elektromagnetische Stellglieder Kupplungen des automatischen Getriebes steuert, wobei eine Schaltung des automatischen Getriebes von einem ersten in ein zweites Übersetzungsverhältnis ausgeführt wird, indem eine Ablaufsteuerung eine erste abschaltende Kupplung (11) öffnet und eine zweite zuschaltende Kupplung (12) schließt, so daß eine Lastübernahme durch die zweite Kupplung (12) stattfindet, wobei während der Schaltung keine Drehzahlüberhöhung einer Getriebeeingangsdrehzahl (9) erfolgt, dadurch **gekennzeichnet,** daß zum Erkennen eines fehlerhaften Ineingrifftretens der zweiten zuschaltenden Kupplung (12) die Getriebeeingangsdrehzahl ständig überwacht wird, wobei ein Fehler dann erkannt wird, wenn die Getriebeeingangsdrehzahl (9) größer wird als ein Grenzwert (dn1) des Produktes aus einer Getriebeabtriebsdrehzahl und dem ersten Übersetzungsverhältnis (10), und Abbrechen der Ablaufsteuerung bei Auftreten eines Fehlers und Beginn einer Regelphase für die erste abschaltenden Kupplung (11).

2.  Verfahren nach Anspruch 1, dadurch **gekennzeichnet,** daß in der Regelphase das Druckniveau der ersten Kupplung (11) derart eingestellt wird, daß die Getriebeeingangsdrehzahl (9) einen zweiten Grenzwert (dn2) nicht übersteigt.

3.  Verfahren nach Anspruch 2, dadurch **gekennzeichnet,** daß in der Regelphase das Druckniveau (pK) der ersten Kupplung (11) nach der Formel berechnet wird:

$$pK = (p(t1)- pOFF) (M\_MOT/M\_MOT (t1)) + pRegel + pOFF$$

$$pRegel = f(dn\_T(Soll), dn\_T(Ist)),$$

**EP 0 793 786 B1**

und wobei die Indizes (t1) denjenigen Zeitpunkt bedeuten, zu dem eine Überhöhung der Getriebeeingangsdrehzahl auftritt, p(t1) das Druckniveau der ersten Kupplung (11) zum diesem Zeitpunkt, M_Mot das aktuelle von der Antriebseinheit abgegebene Moment, M_MOT(t1) das von der Antriebseinheit abgegebene Moment zum Zeitpunkt (t1), dn_T die Differenz der Getriebeingangsdrehzahl (9) minus dem Produkt aus Getriebeabtriebsdrehzahl mal dem ersten Übersetzungsverhältnis (10) und pOFF den Druckanteil der Kolbenrückstellkraft.

4. Verfahren nach Anspruch 1, dadurch **gekennzeichnet,** daß die Regelphase der ersten Kupplung (11) endet, wenn die Differenz der Getriebeeingangsdrehzahl (9) minus dem Produkt aus Getriebeabtriebsdrehzahl mal dem ersten Übersetzungsverhältnis (10) einen positiven Grenzwert (dn3) unterschreitet, danach von einem ersten Druckniveau zu Ende der Regelphase auf ein zweites Druckniveau rampenförmig übergegangen wird und hierbei das zweite Druckniveau dem aus der Ablaufsteuerung berechneten Druckniveau entspricht.

5. Vefahren nach Anspruch 1, dadurch **gekennzeichnet,** daß die erste Kupplung (11) vollständig geöffnet wird, wenn die Differenz der Getriebeeingangsdrehzahl (9) minus dem Produkt aus Getriebeabtriebsdrehzahl mal dem ersten Übersetzungsverhältnis (10) einen negativen Grenzwert (dn4) überschreitet.

6. Vefahren nach Anspruch 1, dadurch **gekennzeichnet,** daß die erste Kupplung (11) zwangsweise geöffnet wird, wenn eine Zeitstufe abgelaufen ist, wobei die Zeitstufe mit Ende einer Gradient-Einstellphase der zweiten Kupplung (12) beginnt.

**Claims**

1. Method for controlling and regulating an automatic transmission driven by a drive unit, preferably an internal combustion engine, with an electronic control mechanism, which controls clutches of the automatic transmission via electromagnetic actuators on the basis of input variables, wherein the automatic transmission is shifted from a first into a second transmission ratio by a sequential control disengaging a first disengaging clutch (11) and engaging a second engaging clutch (12), so that the second clutch (12) takes over the load, wherein no excessive speed increase of a transmission input speed (9) takes place during the shift operation, characterised in that the transmission input speed is constantly monitored to detect faulty engagement of the second engaging clutch (12), wherein a fault is detected if the transmission input speed (9) rises above a limit value (dn1) of the product of a transmission output speed and the first transmission ratio (10), and the sequential control is stopped if a fault occurs and a regulating phase for the first disengaging clutch (11) begins.

2. Method according to claim 1, characterised in that the pressure level of the first clutch (11) is adjusted in the regulating phase such that the transmission input speed (9) does not exceed a second limit value (dn2).

3. Method according to claim 2, characterised in that the pressure level (pK) of the first clutch (11) is calculated in the regulating phase according to the formula:

$$pK = (p(t1) - pOFF) (M\_MOT/M\_MOT (t1)) + pRegel + pOFF$$

$$pRegel = f(dn\_T(Soll), dn\_(T(Ist)),$$

and wherein the indices (t1) denote the instant at which an excessive increase of the transmission input speed occurs, p(t1) the pressure level of the first clutch (11) at this instant, M_Mot the actual moment delivered by the drive unit, M_MOT (t1) the moment delivered by the drive unit at the instant (t1), dn_T the difference of the transmission input speed (9) less the product of the transmission output speed times the first transmission ratio (10), and pOFF the pressure component of the piston return force.

4. Method according to claim 1, characterised in that the regulating phase of the first clutch (11) ends when the difference of the transmission input speed (9) less the product of the transmission output speed times the first transmission ratio (10) falls below a positive limit value (dn3), after which a ramp-like change from a first pressure level at the end of the regulating phase to a second pressure level occurs and the second pressure level then corresponds to the pressure level calculated from the sequential control.

5

**5.** Method according to claim 1, characterised in that the first clutch (11) is completely disengaged when the difference of the transmission input speed (9) less the product of the transmission output speed times the first transmission ratio (10) exceeds a negative limit value (dn4).

**6.** Method according to claim 1, characterised in that the first clutch (11) is automatically disengaged at the end of a time stage, wherein the time stage begins at the end of a gradient adjustment phase of the second clutch (12).

**Revendications**

**1.** Procédé pour contrôler et réguler une boîte de vitesses automatique entraînée par une unité motrice, de préférence un moteur à combustion interne, avec un appareil de contrôle électronique qui commande, en fonction de grandeurs d'entrée, par l'intermédiaire d'éléments de réglage électromagnétiques les embrayages de la boîte de vitesses automatique, une commutation de la boîte de vitesses automatique d'un premier rapport de changement de vitesses en un deuxième rapport de changement de vitesses étant réalisée, du fait qu'une commande séquentielle ouvre un premier embrayage (11) débrayant et ferme un deuxième embrayage (12) embrayant, de façon à ce qu'une prise de charge a lieu par le deuxième embrayage (12), tandis que pendant le changement de vitesse ne se produit pas de survitesse pour une vitesse d'entrée de la boîte de vitesses (9),
**caractérisé** en ce que, pour détecter un début d'engrènement erroné du deuxième embrayage (12) à commander, la vitesse de rotation de la boîte de vitesses est surveillée en permanence, un défaut étant détecté lorsque la vitesse d'entrée de la boîte de vitesses (9) est supérieure à une valeur limite (dn1) du produit obtenu à partir de la vitesse de sortie de la boîte de vitesses et le premier rapport de changement de vitesses (10), et interruption de la commande séquentielle lors de la présence d'un défaut et début d'une phase d'asservissement pour le premier embrayage (11) débrayant.

**2.** Procédé selon la revendication 1, **caractérisé** en ce que dans la phase d'asservissement, le niveau de pression du premier embrayage (11) est réglé de telle façon que la vitesse d'entrée de la boîte de vitesses (9) ne dépasse pas une deuxième valeur limite (dn2).

**3.** Procédé selon la revendication 2, **caractérisé** en ce que dans la phase d'asservissement, le niveau de pression (pK) du premier embrayage (11) est calculé selon la formule :

$$pK = (p(t1) - pOFF) (M\_Mot/M\_Mot (t1)) + pRegel + pOFF$$

$$pRegel = f(dn\_T(Soll), dn\_T(Ist)),$$

où les indices (t1) représentent le moment auquel se produit une survitesse pour la vitesse d'entrée de la boîte de vitesses, p(t1) le niveau de pression du premier embrayage (11) à ce moment, M_Mot le couple effectif produit par l'unité motrice, M_MOT(t1) le couple effectif produit par l'unité motrice au moment (t1), dn_T la différence de la vitesse d'entrée de la boîte de vitesses (9) moins le produit obtenu à partir de la vitesse de sortie de la boîte de vitesses multiplié par le premier rapport de changement de vitesses (10) et pOFF la part de la pression de la force de rappel de piston.

**4.** Procédé selon la revendication 1, **caractérisé** en ce que la phase d'asservissement du premier embrayage (11) se termine lorsque la différence de la vitesse d'entrée de la boîte de vitesses (9) moins le produit obtenu à partir de la vitesse de sortie de la boîte de vitesses multiplié par le premier rapport de changement de vitesses (10) devient inférieure à une valeur limite positive (dn3), la transition d'un premier niveau de pression à la fin de la phase d'asservissement vers un deuxième niveau de pression ayant lieu ensuite, le deuxième niveau de pression correspondant ici au niveau de pression calculé à partir de la commande séquentielle.

**5.** Procédé selon la revendication 1, **caractérisé** en ce que le premier embrayage (11) est complètement ouvert lorsque la différence de la vitesse d'entrée de la boîte de vitesses (9) moins le produit obtenu à partir de la vitesse de sortie de la boîte de vitesses multiplié par le premier rapport des changements de vitesse (10) dépasse une valeur limite négative (dn4).

**6.** Procédé selon la revendication 1, **caractérisé** en ce que le premier embrayage (11) est ouvert de façon forcée lorsqu'un intervalle de temps est écoulé, l'intervalle de temps commençant avec la fin d'une phase de réglage du gradient du deuxième embrayage (12).

EP 0 793 786 B1

FIG.1

Fig. 2A

Fig. 2B